# EUROPEAN PATENT SPECIFICATION

(11) **EP 0 814 652 B1**
(45) Date of publication and mention of the grant of the patent: **29.12.2004**
(21) Application number: 96901934.8
(22) Date of filing: 07.02.1996
(51) Int. Cl.: A01G 25/02

(54) **NEW EMITTER UNIT FORMS**
NEUE AUSLASSFORMEN
NOUVELLES FORMES D'UNITES EMETTRICES

(30) Priority: 07.02.1995 GR 95100043
(43) Date of publication of application: 07.01.1998
(73) Proprietor: DERMITZAKIS, Emmanuil, GR-115 25 Athens (GR)
(72) Inventor: DERMITZAKIS, Emmanuil, GR-115 25 Athens (GR)
(86) International application number: PCT/GR1996/000004
(87) International publication number: WO 1996/024243

(56) References cited:
- EP-A- 0 636 309
- AU-B- 633 097
- FR-A- 2 500 259
- FR-A- 2 625 544
- US-A- 3 777 980
- US-A- 4 008 853

## Description

### BACKGROUND OF THE INVENTION

This application is a continuation of PCT/GR96/00004, claiming priority from Greek patent application 95100043, filed in Greece on February 7, 1995.

### 1. Field of the Invention

The present invention relates to emitters for drip irrigation lines and, in particular, to emitters with filtering capabilities for the water.

### 2. Description of the Prior Art

Drip irrigation emitter systems are used to regulate the flow of the water through the irrigation piping. As disclosed in European Patent No. A1 0138636, systems have been developed with cylindrical apertures of varying shapes, e.g., polygonal or rectangular in structure. These apertures have constant dimensions, with one dimension normally smaller than the narrowest dimension of the water paths in the emitter.

U.S. Patent No. 4,307,841 discloses a flat, smooth cavity base wherein the compensation of water flow is performed on the rim of the aperture with a high-pressure difference before and after the rim.

Further, as disclosed in U.S. Patent Nos.4,147,307, 4,344,576 and 4,382,549 and European Patent No. A1 0006755, emitters that may have previously been considered to have filtering capabilities actually have washout capabilities. During the water supply compensation, this washout capability allows the increase or decrease of the water flow only after the water with the foreign bodies has entered the emitter.

It is therefore an object of this invention to provide an emitter for irrigation pipes that has the capability of filtering any foreign bodies from the water prior to entering the emitter.

### SUMMARY OF THE INVENTION

In our new self-compensating emitter the water is filtered upon inlet by an elastic membrane, which cover and encircles the sharp edges of a closed cavity. On the cavity edges, shallow channels or wedge shaped protrusions which form wide and shallow channels between them are engraved. In the center of the cavity a hole exists, wherefrom the water passes to a flow-restricting path before it is discharged to the atmosphere. The emitter of the invention is defined by the features of claim 1.

The water enters from the shallow channels of the sharp edges under the membrane, which moves and bends continuously under the cavity due to the pressure difference between its top and base surface.

The geometry, as well as the synergy between the cavity and the moving membrane, causes them to move continuously relative to each other, in a manner that the membrane will always push the foreign bodies which accumulate in the periphery of the cavity or on the membrane itself, removing them from the emitter.

### BRIEF DESCRIPTION OF THE DRAWINGS

Fig.1 shows a cross-sectional side view of a first embodiment of the present invention;
Fig.2 shows a cross-sectional front view of a first embodiment of the present invention in operation;
Fig.3 shows a cross-sectional front view of a first embodiment of the present invention with full blockage;
Fig.4 shows a cross-sectional front view of a first embodiment of the present invention with the membrane returned to its original position;
Fig.5 shows a plan view of a first embodiment of the present invention;
Fig.6 shows a cross-sectional front view of a first embodiment of the present invention as attached to the pipe wall;
Fig.7 shows a cross-sectional front view of a second embodiment of the present invention.
Fig.8 shows a plan view of a third embodiment of the present invention;
Fig.9 shows a cross-sectional side view of the embodiment of Fig.8 of the present invention;
Fig.10 shows an enlarged-sectional side view of the embodiment of the Fig.8 of the present invention comparing the relative membrane in operations;
Fig.11 shows a plan view of the membrane of an embodiment of the present invention;
Fig.12 shows a cross-sectional front view of a fourth embodiment of the present invention;
Fig. 13 and 14 show a cross-section and a plan view of a fifth embodiment of the present invention;

### DETAILED DESCRIPTION OF THE PREFERRED EMBODIMENTS

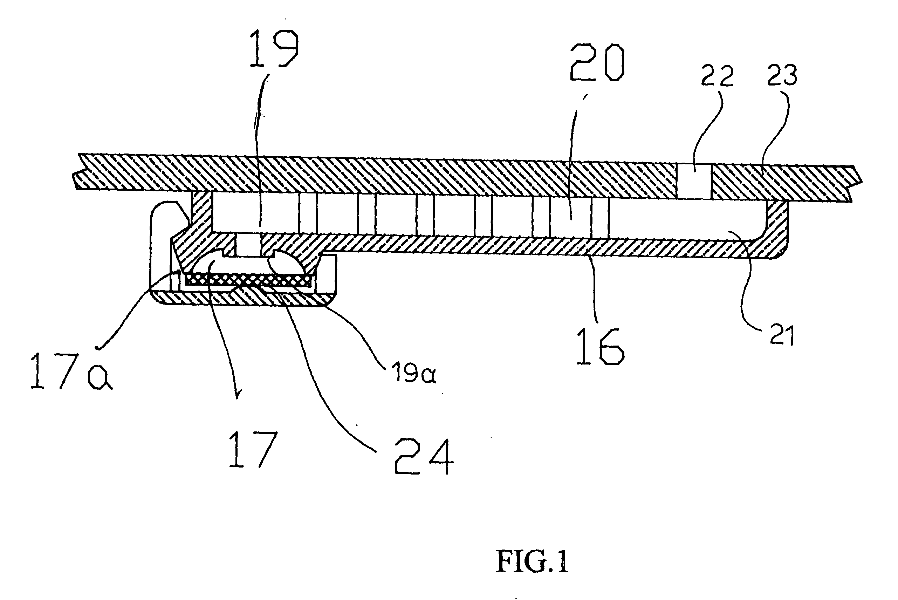

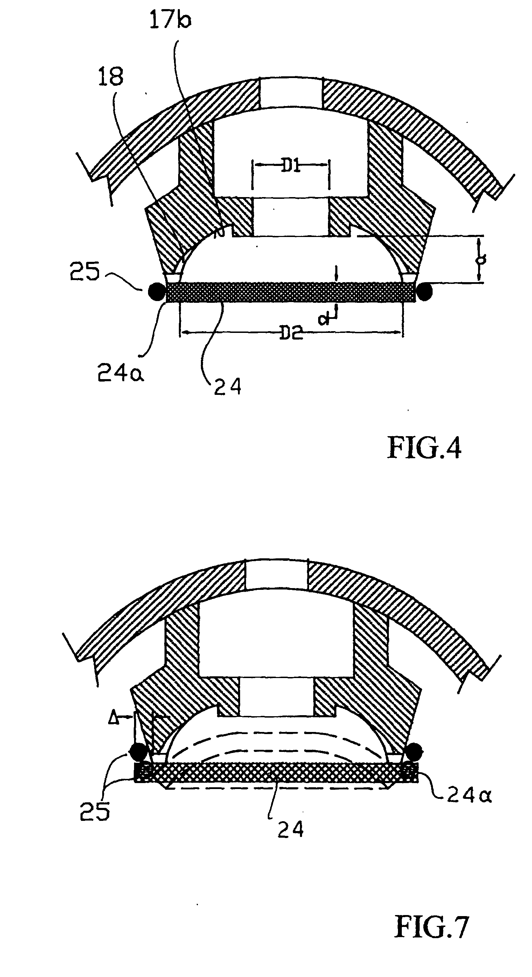

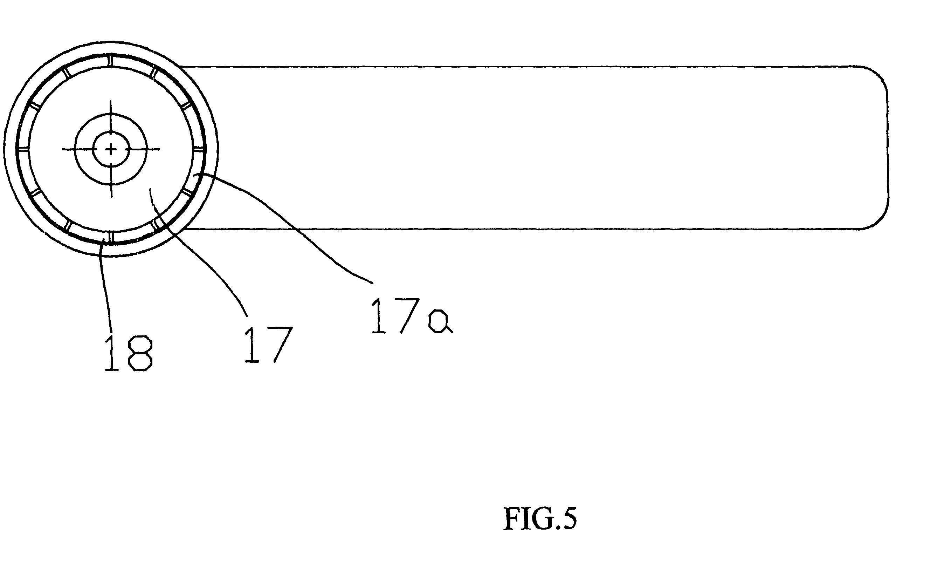

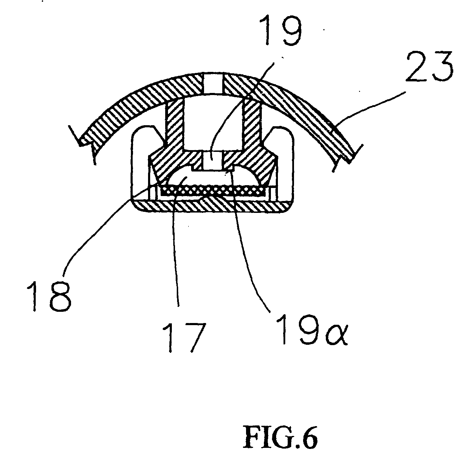

In the figures 1 - 14, self-compensating emitters of this invention are described, such emitters being suitable for attachment to the inner part of a tube.

The body of the emitter 16 bears a closed, almost spherical cavity 17 with a sharp edge 17a and shallow channels engraved radially 18 along the internal surface of the cavity, whereas a membrane 24 just covers the edges 17a of the cavity. At the center of the cavity 17, a hole 19 with a rim 19a is located. The water enters from the shallow channels 18 into the cavity wherefrom it passes via the hole 19 towards the meander path 20, and via the chamber 21 and the hole 22 of the tube 23, it is discharged to the atmosphere.

The internal surface 17b of the cavity and the cylindrical side surface 24a of the membrane 24 constitute the filter of the emitter.

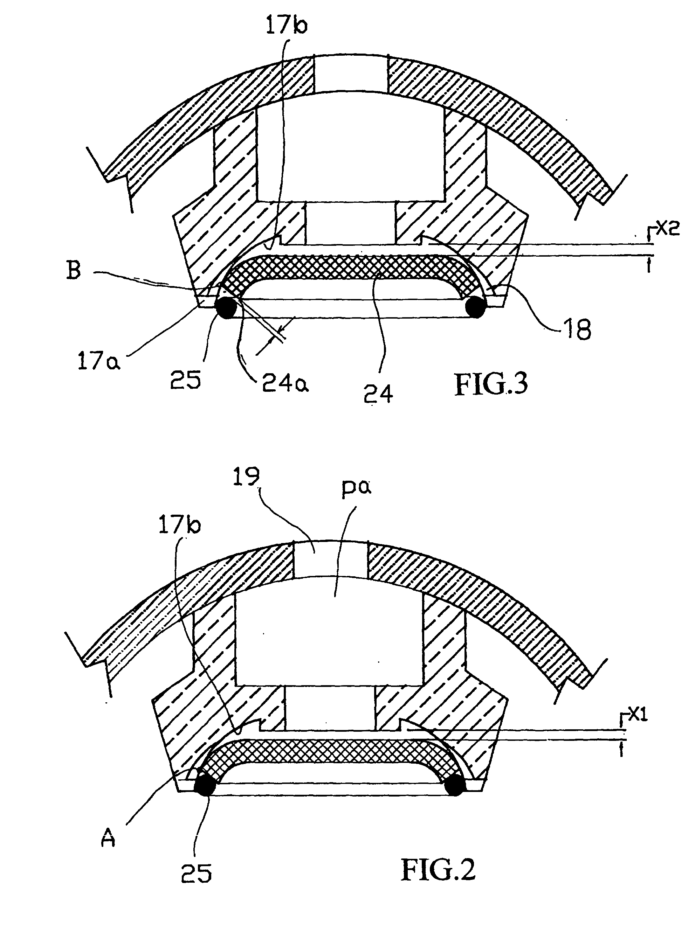

Figures 2 - 4 describe the self-compensating operation of the flow and the self - cleaning features of this filter.

The water inlet via the shallow channels 18 under the membrane creates reduce pressure conditions depending on the extent of which the membrane 24 is bent and assumes every time a fully defined position and distance x1 relative to the rim 19a, so that the flow through the emitter remains constant. In higher pressures, the membrane enters into the small cavities of the channels 18, reducing even further the water supply.

If in the particular operating position, a compact ring of foreign particles 25 concentrates around the whole surface 24a or part thereof, the filter will close completely and the flow of the water towards the open flow restricting path 20 will be interrupted. Due to the above event, the pressure in the cavity 17 will be reduced further with the result that the membrane 24 moves nearer to the rim 19a of the hole 19, position x2, figure 3, where x2<x1. At the same time, the side surface 24a of the membrane 24 is displaced from the ring 25, the flow in the flow restricting path is resumed by the new void created and the membrane returns to the position x1, and so on. This continue interchange between positions x1 and x2, destroys or disturbs the cohesion of the compact ring of foreign particles 25, such ring eventually being removed completely from the emitter, each time that the irrigation phase is interrupted, completed or repeated, as the membrane returns then to its original horizontal position, figure 3 and scrapes automatically the foreign particles.

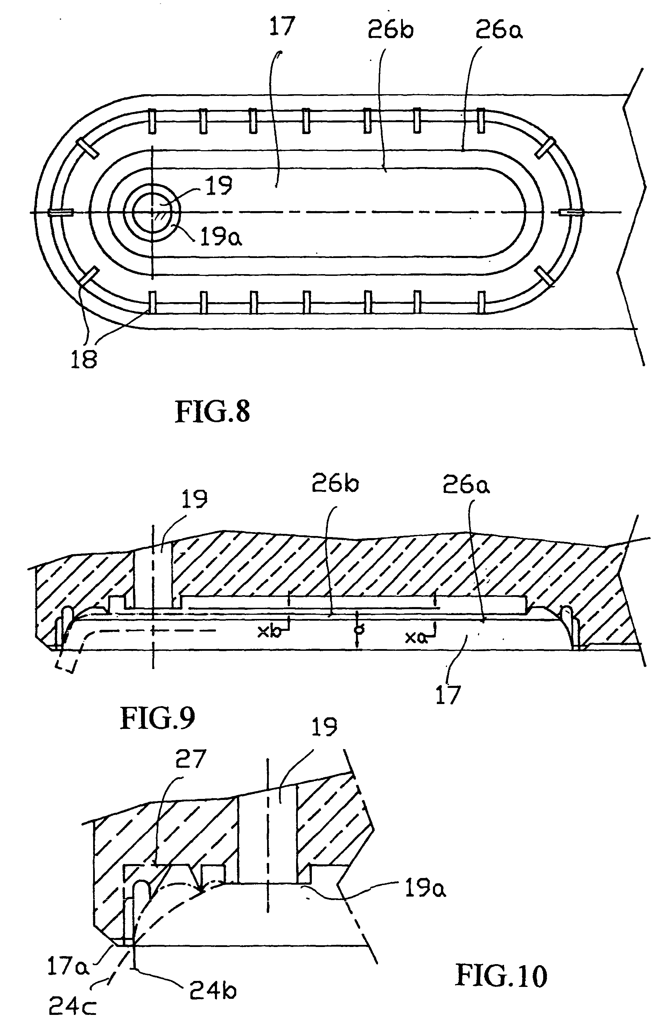

In general, we observe that relative motion exists between the side surface 24a of the membrane and the internal surface 17b of the cavity, this motion contributing to the mechanical removal of foreign bodies and the self - cleaning of the filter. For each value of the internal pressure PE of the water in the tube 23, the membrane 24, and in particular its surface 24a reaches a different peripheral contour line passing from the points A, B, etc.
In the variation in figure 7, the membrane 24 has a bigger dimension A, and covers the cavity. In this case, the relative motion scrapes the ring of foreign particles 25 immediately from the membrane itself and the emitter.

Experimental application has shown that best results are achieved when the following relationships hold: d ≤ a, 3D1 < D2 < 10D1, where d is the thickness of the membrane 24, a is the distance of it from the rim 19a, D1 the diameter of the hole 19, D2 the diameter of the membrane.

In figures 8 - 10 another variation is described, where the cavity 17 could have an oval form for increasing the length of its perimeter and the surface of the filter. In the same variation the hole 19 is not coaxial and peripheral, closed protruding contours appear in the internal surface of the cavity, which actually constitute successive contact positions of the membrane with the cavity, during the sequential descent of the membrane during the phase of self-compensation of the water flow to the emitter.

The motion of the water, in the beginning, in the shallow channels creates a pressure reduction and the membrane starts to descend towards the contours 26a, 26b. As the contour 26a, is already distant from the base by a length Xa, the velocity of water is higher in the void between the rim of the contour and the membrane, resulting in pulling the membrane and lowering it into the periphery of the cavity 17. The membrane is also lowered between the spaces between two successive protruding contours as well. The phenomenon is understood by comparing the positions 24b and 24c. Position 24c corresponds to a variation of a flat base 27.

This additional lowering is due to the fact that the pressure in this case is not the same at all points under the membrane, as it happens in a flat base variation 27, but is gradually reduced from one contour to another. The same pressure applies only along the entire peripheral void, between two successive contours.

The advantage of the contours is the increase of the relative motion between the edges 17a and the surface 24a for better scraping of foreign particles.

Another advantage (apart from proper filtering) is the ability to maintain steady water flow in the emitter for all water pressures in the tube, in a far more efficient manner, as the compensation of the void spaces in the water inlet is gradual, in a large number of far bigger surfaces and points and with a smaller pressure difference from one surface to another.

Finally, the positioning of the filtering system before the flow restricting path 20 of figure 1, has the advantage that due to the permanent throttling of the water in the shallow channels 18, even in the beginning of the operation of the emitter, i.e. in the flushing out phase, the usual sudden increase of water discharge (which can lead to a doubling of the latter) is avoided, prior to the activation of the membrane. The phenomenon of this sudden increase of the discharge in the start-up of the operation, causes the known significant problems originated by a prolonged non - uniformity of the outlet of the emitters, as the supply of the networks and the pumps is not sufficient for such a momentary increase.

For this reason the meander 20 can be omitted without causing a problem of a sudden increase of the discharge; the hole 19 then discharges directly to the atmosphere.

Should the meander remain in place, there is a possibility to increase its cross section area considerably in order to avoid all blockage problems, as the pressure drop in the filter has already decreased the velocity of the water. As the biggest problem associates with blockages is caused by this conventional flow - restricting path 20, emitters of exceptionally small discharge could be manufactured, with a spacious flow-restricting path, or even without one.

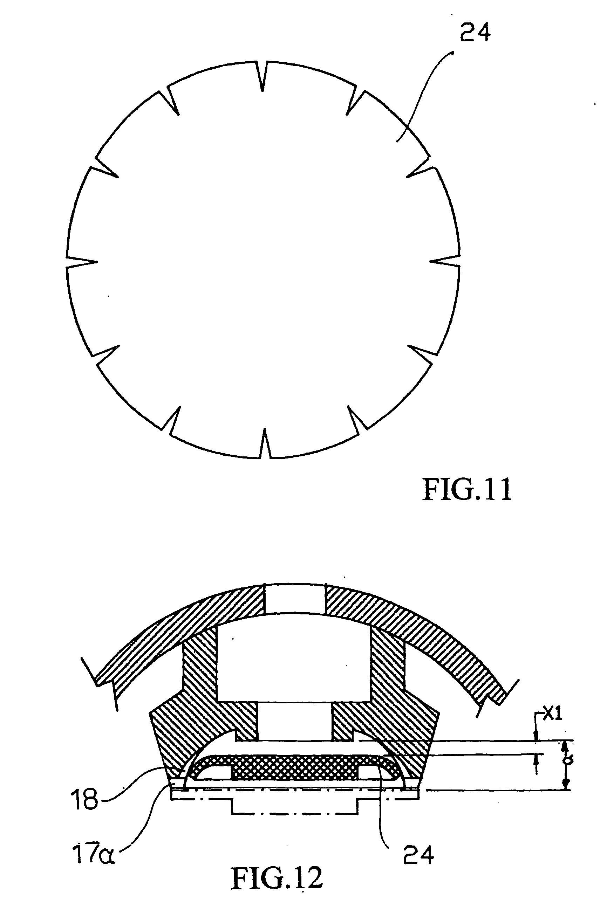

Figures 11 and 12 illustrate two variations of the membrane 24. In one of these variations, the membrane bears radial cuts; in the other it is thinner in its periphery. Both variations facilitate a more intense bending in the periphery of the membrane, with an increase of the relative movement of the membrane and the cavity.

In another variation the filter system terminates to a straight line instead of a periphery of a circle.

Also, in another variation it is possible that after the compensation of the discharged performed by the filter, another cavity with a hole is present as well, after the flow restricting meander-like path, where the final compensation of the water supply is performed by the membrane itself (not drawn).

It is also obvious that a dynamic filter with a moving membrane can be operate only as an inlet filter of the water without a significant pressure drop, and that another system for the final compensation of the water supply using the same membrane, is fitted 20 after the flow restricting meander-like path. It is also possible that the flow-restricting path is absent and that both the filtering and the compensation of the supply are only performed in the cavity 17 (not drawn). It is also possible that the membrane operates in only two positions.

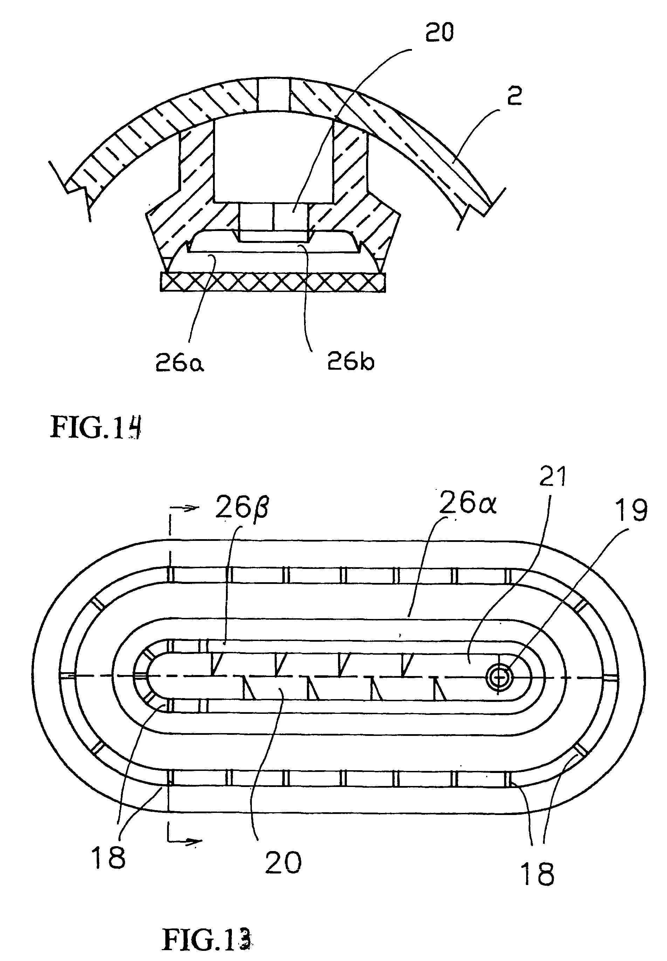

Figures 13 and 14, illustrate a variation where the flow restricting meander-like path 20 exist at the base of the cavity 17. In this case, the small channels at the edges of the contour protrusion 26b are more concentrated in the beginning of the path 20. The filtering is performed in the whole periphery of the emitter, whereas the constant supply is assured both in the contours or the inlet of the cavity 21, and/or the rim 19.

The emitter of the present invention is preferably constructed of thermoplastic material. The emitter is constructed of elastomeric material so that the membranes are reinstated. The emitter is manufactured in a shape suitable for positioning either onto or into the tube. They can also form part of a cylindrical emitter body suitable for positioning into the tube. The membrane may or may not be flat.

It will be understood by those skilled in the art that while the foregoing description sets forth in detail preferred embodiments of the present invention, modifications, additions and changes may be made thereto without departing from the scope of the invention defined by the claims. Having thus described my invention with the detail and particularity required by the Patent Laws, what is desired to be protected by Letters Patent is set forth in the following claims.

It is stressed that the filter systems of figures 1 - 14 can be used with online emitters as well (not drawn).

## Claims

1. Self - compensating emitter consisting of a cavity (17), an elastic membrane (24) with a thickness (d) and a diameter (D2), which covers the cavity (17), in the center of which a hole exists, with a rim (19a) and a diameter (D1). The water inlet to the cavity (17) under the membrane (24), which is at a distance (a) from the rim (19a) of the hole (19), creates a pressure reduction, which forces the membrane (24) to move and to bent continuously, according to the pressure differences, **characterized by** that the closed cavity bears a sharp edge (17a) and radially arranged shallow channels (18) extending to the internal surface (17b) of the cavity (17), and by that the membrane (24), due to the relative movement, displaces foreign particles in a mechanical manner from the edge (17a) of the cavity (17).

2. Emitter according to claim 1, where the cavity (17) is oval shaped, closed contours (26a, 26b) appear in its internal surface, which are successive contact positions of the membrane with the cavity, and which are positioned at a level lower than the position (24c) which corresponds to the full immersion of the membrane into a flat - base cavity (27).

3. Emitter according to claim 1, where the membrane covers exactly the edge (17a) of the cavity (17).

4. Emitter according to claim 1, where the membrane has a bigger dimension than the cavity (17) and the edge (17a).

5. Emitter according to claim 2, in the bottom of the cavity a flow restricting meander flow path (20) exists.

6. Emitter according to claim 1, where the membrane bears in its periphery radial cuts.

7. Emitter according to claim 1, where the periphery of the membrane is thinner than the center of it.

8. Emitter according to claim 1, where after the cavity (17), which operates as a filter, a second cavity exists that communicates with said cavity (17) and which operates as a flow compensating arrangement.

9. Emitter according to claim 1, where after the cavity (17), a meander-like path exists that communicates with said cavity.

10. Emitter according to claim 1, where the emitter is configured in a cylindrical shape suitable for positioning into the tube.

11. Emitter according to claim 1, where the emitter is constructed of elastomeric material.

12. Emitter according to claim 1, where the emitter is configured in a shape suitable for positioning onto the tube.

## Patentansprüche

1. Selbstkompensierter Tropfer bestehend aus einer Kavität (17), einer elastischen Medmbran (24) von einer Dicke (d) und einer Diameter (D2), die die Kavität(17) deckt. Im Zentrum der Membrane existiert eine Öffnung mit einem Rand (19a) von einer Diameter (D1). Das Wasser gelangt in der Kavität (17) unter der Membrane (24), die in einer Distanz (a) ober dem Rand (19a) der Öffnung (19) steht, eine Pressungsreduzierung verursacht, welche die Membrane (24) zu einer dauernde Bewegung und Biegung, je nach dem Pressungsunterschied, zwangt, charakterisiert durch die Tatsache daß die geschlossene Kavität einen scharfen Rand (17a) und radial angeordneten untiefen Kanäle besitzt, welche bis zu der inneren der Oberfläche (17b) der Kavität (17) galangen, und daß die Membrane (24) im Folge dieser relativen Bewegung, fremden Körper, mechanisch aus dem Rand (17a) der Kavität ( 17) entfernt.

2. Tropfelement nach dem Anspruch 1, wobei die Kavität (17) eine ovale Form mit geschlossenen Konturen (26a, 26b) in der inneren Oberflächen besitzt, welche succesife Kontaktstellungen der Membrane mit der Kavität darstellen, und die in einer niedrigen Höhe, im vergleich zur Stellung (24c), die in der totale Versenkung der Membrane in das innere einer gleichartigen Kavität mit flachem Boden (27) entspricht, untergebracht sind.

3. Tropfelemet nach dem Anspruch 1, wobei die Membrane den scharfen rand (17a) der Kavität genau deckt.

4. Tropfelement nach dem Anspruch 1, wobei die Membrane größer als die Kavität (17) und ihrer scharfen Rand (17a) ist.

5. Tropfelement nach dem Anspruch 2, wobei im Boden der Kavität ein meanderförmiger, pressungsreduzierender Wasserkanal (20) existiert.

6. Tropfelement nach dem Anspruch 1 wobei die Membrane in ihrer Umfang, radiale Schlitzen besitzt.

7. Tropfelement nach dem Anspruch 1, wobei die Membrane in ihrer Umfang im Vergleich zu ihrem Zentrum, dünner ist.

8. Tropfelement nach dem Anspruch 1, wobei nach der Kavität (17) die als Flter arbeitet, eine zweite Kavität existiert, die mit der vorerwähnten Kavität (17) in Verbindung steht, und die als eine stromkompensierte Einrichtung dient.

9. Tropfelement nach dem Anspruch 1, wobei nach der Kavität (17) ein meanderförmiger Wasserkanal existiert, der mit der vorerwähnten Kavität verbunden ist.

10. Tropfelement nach dem Anspruch 1, wobei das Tropfelement zu einer zylindrischen Form gestaltet ist, geeignet für das einführen ins Rohr.

11. Tropfelement nach dem Anspruch 1, wobei das Tropfelement aus elastomerischem Material besteht.

12. Tropfelement nach dem Anspruch 1, wobei das Tropfelement in eine Form gestaltet ist, die geeignet für das Aufsetzen auf einem Rohr.

## Revendications

1. Emetteur autocompensé d'irrigation goutte à goutte composé d'une cavité (17) et d'une membrane élastique (24)qui se **caractérise par** l'épaisseur (d) et le diamètre (D2) et couvre ladite cavité (17)portant à son centre un orifice à bord (19a) et diamètre (D1). La conduite d'eau (17) sous la membrane (24) qui se trouve à distance (a) du bord (19a) de l'orifice (19) réduit la pression la différence de laquelle force la membrane (24) de se mouvoir et se courber de façon continue; l'émetteur en question est **caractérisé par le fait que** la cavité fermée porte un bout pointu(17a)et des canaux radiallement arrangés et étendus jusqu'à la surface interne (17b) de la cavité (17) et que -grâce au mouvement respectif effectué entre cavité et membrane- la membrane (24) déplace les particules obstruantes de manière mécanique.

2. Emetteur d'irrigation goutte à goutte selon la revendication 1, où la cavité (17), qui est de forme ovale, porte à sa surface interne des contours fermés (26a),(26b)qui constituent des positions successives de contact entre membrane et cavité et qui sont disposés à un niveau inférieur de la position (24c)correspondante à l'émersion complète de la membrane dans une cavité à base plate (27).

3. Emetteur d'irrigation goutte à goutte selon la revendication 1, où la membrane couvre à précision le bout(17a) de la cavité (17).

4. Emetteur d'irrigation goutte à goutte selon la revendication 1, où la dimension de la membrane est supérieure à celle de la cavité 17 et son bout(17a).

5. Emetteur d'irrigation goutte à goutte selon la revendication 2, où au fond de la cavité il y a une voie de restriction du débit en forme de méandre.

6. Emetteur d'irrigation goutte à goutte selon la revendication 1, où la membrane porte sur sa périphérie des coupes radiales.

7. Emetteur d'irrigation goutte à goutte selon la revendication 1, où la périphérie de la membrane est plus fine que le centre de la dernière.

8. Emetteur d'irrigation goutte à goutte selon la revendication 1, où après la cavité (17) qui serve comme filtre, une deuxième cavité communique avec la première(17) et fonctionne comme arrangement compensateur du débit.

9. Emetteur d'irrigation goutte à goutte selon la revendication 1, où après la cavité (17), une voie en forme de méandre communique avec ladite cavité.

10. Emetteur d'irrigation goutte à goutte selon la revendication 1, où l'émetteur est adéquatement configuré en forme cylindrique pour être placé dans le tuyau.

11. Emetteur d'irrigation goutte à goutte selon la revendication 1, où l'émetteur est construit de matériau type élastomère.

12. Emetteur d'irrigation goutte à goutte selon la revendication 1, où l'émetteur est adéquatement configuré pour être placé sur le tuyau.
